# EUROPÄISCHE PATENTSCHRIFT

(11) **EP 2 264 347 B1**
(45) Veröffentlichungstag und Bekanntmachung des Hinweises auf die Patenterteilung: **02.10.2013**
(21) Anmeldenummer: 10401076.4
(22) Anmeldetag: 04.06.2010
(51) Int. Cl.: F16L 9/00, F16L 55/24, F16L 58/04, F16L 58/08, F16L 58/14, F16L 58/16, E04D 13/076, F16L 58/10, F15D 1/02, F15D 1/06, E04D 13/064

(54) **Selbstreinigungs- und/oder Fördervorrichtung und/oder druck- und/oder reibungsverlustbeeinflussende Struktur**
Self-cleaning and/or transport device and/or structure which influences pressure and/or friction loss
Dispositif de nettoyage et/ou de transport automatique et/ou structure influençant la perte de charge et/ou la friction

(30) Priorität: 12.06.2009 DE 102009024960
(43) Veröffentlichungstag der Anmeldung: 22.12.2010
(73) Patentinhaber: Dietrich Wetzel KG, 08525 Plauen (DE)
(72) Erfinder: Wetzel, Dietrich, 08525 Plauen (DE); Wolf, Reiner, 08606 Oelsnitz (DE); Berger, Wolfgang, 99423 Weimar (DE)
(74) Vertreter: Steiniger, Carmen

(56) Entgegenhaltungen:
- EP-A2- 1 314 406
- WO-A2-98/39534
- GB-A- 2 156 240
- US-A1- 2005 241 605

## Beschreibung

Die vorliegende Erfindung betrifft eine Selbstreinigungs- und/oder Fördervorrichtung und/oder druck- und/oder reibungsverlustbeeinflussende Struktur für fluide Medien mit einer ein Strömungsprofil aufweisenden Oberfläche.

Bei der Verwendung von Rohren oder Dachrinnen ist das Problem bekannt, dass sich in diesen Feststoffteilchen ablagern können, die auf Dauer die Transport- bzw. Entwässerungsfähigkeit des Rohres oder der Dachrinne erheblich beeinträchtigen können. Ferner können sich Ablagerungen in Form von Verschmutzungen auch auf ebenen Oberflächen, wie zum Beispiel Dächern, absetzen, welche aufgrund der schlechten Erreichbarkeit solcher Oberflächen nur mit entsprechendem Aufwand entfernbar sind.

Aus dem Stand der Technik sind Liningverfahren bekannt, bei welchen Schlauchliner zur Sanierung von Kanalrohren verwendet werden, um kurzfristig eine Boden- und Grundwasserkontamination durch undichte Kanalrohre vermeiden zu können. Bei einem Schlauchliningverfahren wird ein flexibler Schlauch aus Trägermaterial mit einem aushärtbaren Harz getränkt und in ein zu sanierendes Kanalrohr eingebracht. Durch die Aushärtung des Harzes entsteht ein neues Kunststoffrohr in der bestehenden Rohrleitung, welches in der Regel durch das ausgehärtete Harz eine glatte Oberfläche aufweist, welche einem über die glatte Oberfläche strömenden Medium einen möglichst geringen Widerstand entgegensetzt. Es hat sich jedoch gezeigt, dass sich insbesondere bei Rohrkrümmungen, Abzweigungen, Vereinigungen, Reduzierungen und Rohrerweiterungen solcher Rohre Feststoffteilchen, die von dem strömenden Medium transportiert werden, absetzen. Auch bei einem diskontinuierlichen Betrieb des Rohres verhindert die glatte Oberfläche nicht die Ablagerung von Feststoffteilchen. Diese Ablagerungen bewirken mit der Zeit eine Verringerung des Strömungsquerschnittes und damit eine Beeinträchtigung der Funktionstüchtigkeit der Rohrleitung.

Aus der Druckschrift DE 199 45 009 A1 sind Rohrleitungen und Leitungselemente zum Transportieren fließfähiger Medien bekannt, die einen Selbstreinigungseffekt aufweisen. Dabei ist an der Rohrinnenseite, welche mit dem fließfähigen Medium in Berührung kommt, eine makroskopisch und/oder mikroskopisch strukturierte Oberfläche vorgesehen. Die strukturierte Oberfläche weist hoch- und tiefliegende oder konkav-konvexe Bereiche auf, die sich quer zur Fließrichtung ständig abwechseln. Die hoch- und tiefliegenden Bereiche können dabei linienförmig oder punktförmig ausgebildet sein, beispielsweise durch die Ausbildung von ringförmigen, quaderförmigen, pyramidenförmigen, kugelsegmentförmigen, zylinderförmigen oder kegelförmigen Erhebungen.

Die Druckschrift DE 199 45 009 A1 schlägt vor, dass die verwendeten Oberflächenstrukturen entweder aus dem Material der Rohrleitung selbst oder durch ein von dem Rohrleitungsmaterial unabhängigen bzw. getrennten Material ausgebildet sind. Die strukturierte Oberfläche kann dabei in Form einer auf die Rohrinnenwand aufgebrachten Beschichtung vorgesehen sein, wobei die Beschichtung auch aus Folien oder Platten bestehen kann, die auf die Rohrinnenwand aufgebracht sind.

Mit den in der Druckschrift DE 199 45 009 A1 vorgeschlagenen Rohrleitungen und Leitungselementen ist ein hoher Aufwand verbunden, um die Strukturierung einer Oberfläche der Innenseite eines Rohres gewährleisten zu können. Für eine einstückige Lösung, bei welcher die Oberfläche einer Rohrleitung direkt in dem Material der Rohrleitung strukturiert wird, muss eine spezielle Vorrichtung verwendet werden, um in dem Rohrinneren arbeiten zu können. Alternativ kann die Rohrleitung auch in Längsrichtung geöffnet werden, um die Strukturierung vorzunehmen, wobei die beiden Rohrhälften nachfolgend wieder dicht zusammengefügt werden müssen. Der Einsatz von Beschichtungen, insbesondere in Form von Platten, ist ferner mit einem hohen Verarbeitungsaufwand verbunden, da die Platten aufgrund ihrer Steifigkeit die gleiche Krümmung wie die zu beschichtende Rohrleitungsinnenwand aufweisen müssen und zudem schwer in die Rohrleitung, vor allem wenn die Rohrleitung nicht gerade verläuft, einbringbar sind.

Aus der WO 9 839 534 A ist eine als Auskleidung einer Dachrinne gebildete Fördervorrichtung bekannt, diese weist ein dreidimensionales Strömungsprofil auf.

Es ist daher die Aufgabe der vorliegenden Erfindung eine hochwirksame und dauerhaft haltbare Selbstreinigungs- und Fördervorrichtung und/oder druck- und/oder reibungsverlustbeeinflussende Struktur für fluide Medien zur Verfügung zu stellen, die einfach und mit hoher Effektivität mit einer großen Vielfalt an Strömungsprofilen herstellbar ist und die es ermöglicht, unterschiedliche und auch bereits installierte Objekte nachträglich auszurüsten, um bei diesen Objekten einen Selbstreinigungs-, Förder- und/oder Entwässerungseffekt zu erzielen und/oder gezielt einen Reibungs- und/oder Druckverlust zu beeinflussen.

Die Aufgabe wird durch eine Selbstreinigungs- und/oder Fördervorrichtung und/oder druck- und/oder reibungsverlustbeeinflussende Struktur der oben genannten Gattung gelöst, wobei das Strömungsprofil wenigstens eine dreidimensionale, in oder auf wenigstens ein flexibles Basismaterial genähte oder gestickte Struktur und/oder wenigstens eine mittels Nähen oder Sticken in oder auf dem wenigstens einen Basismaterial befestigte oder ausgebildete dreidimensionale Struktur aufweist.

Dadurch, dass das Strömungsprofil durch eine genähte oder gestickte Struktur ausgebildet ist, ist es möglich, die erfindungsgemäße Selbstreinigungs- und/oder Fördervorrichtung und/oder druck- und/oder reibungsverlustbeeinflussende Struktur in einem maschinellen Näh- oder Stickverfahren kostengünstig in großen Mengen herzustellen. Beispielsweise kann die genähte oder gestickte Struktur durch Soutagestickerei und/oder Mehrkopfstickerei hergestellt werden.

Durch die Verwendung eines Stick- oder Nähverfahrens können ferner vielfältige Strömungsprofile in oder auf das flexible und damit textiltechnologisch gut bearbeitbare Basismaterial gebracht werden, wobei Form und Anordnung der Strömungsprofile nahezu frei wählbar sind. Dabei kann durch Nähen oder Sticken eine besonders feste und belastbare Verbindung zwischen dem Basismaterial und der in oder auf das Basismaterial genähten oder gestickten Struktur zur Verfügung gestellt werden.

Da das Strömungsprofil auch in Form wenigstens einer in oder auf dem Basismaterial befestigten oder ausgebildeten dreidimensionalen Struktur vorgesehen sein kann, können geeignete, dreidimensionale Elemente oder Strukturen vorgefertigt und nachfolgend auf das Basismaterial aufgenäht oder aufgestickt werden.

Das Strömungsprofil der erfindungsgemäßen Selbstreinigungs- und/oder Fördervorrichtung und/oder druck- und/oder reibungsverlustbeeinflussende Struktur weist eine dreidimensionale Struktur auf, die es ermöglicht, dass sich zwischen der Oberfläche des Strömungsprofils und dem zu transportierenden, fließfähigen Medium, wie beispielsweise Flüssigkeit oder Gas, eine turbulente oder quasiturbulente Strömung einstellt, wobei die turbulente oder quasiturbulente Strömung eine Ablagerung von in dem zu transportierenden Medium befindlichen Feststoffteilchen verhindert und/oder Druckverluste und/oder Reibungsverluste beeinflussen kann. Ferner können durch das Strömungsprofil bereits auf der Oberfläche der erfindungsgemäßen Selbstreinigungs- und/oder Fördervorrichtung und/oder druck- und/oder reibungsverlustbeeinflussenden Struktur befindliche Feststoffteilchen auch in einem diskontinuierlichen Betrieb der Selbstreinigungs-und/oder Fördervorrichtung und/oder druck- und/oder reibungsverlustbeeinflussende Struktur besonders gut weitertransportiert werden, sodass durch die Selbstreinigungs-und/oder Fördervorrichtung und/oder druck- und/oder reibungsverlustbeeinflussende Struktur ein besonders guter Selbstreinigungseffekt für unterschiedlichste Objekte bereitgestellt werden kann.

Es hat sich als besonders günstig erwiesen, wenn das Basismaterial und/oder die dreidimensionale Struktur eine textile Struktur ist. Durch die verhältnismäßig weiche Oberfläche der textilen Struktur kann eine erhöhte Fließgeschwindigkeit erzielt werden, wodurch sich die Möglichkeit einer Durchflusserhöhung durch die erfindungsgemäße Selbstreinigungs- und/oder Fördervorrichtung und/oder druck- und/oder reibungsverlustbeeinflussende Struktur ergibt. So kann beispielsweise eine aus einem textilen Basismaterial erfindungsgemäß ausgebildete Struktur beim Fixieren auf einem Untergrund nur aufgeklebt und nicht vollständig mit Harz oder Klebstoff durchtränkt werden, sodass die weiche Oberfläche des textilen Basismaterials erhalten bleibt und sich dadurch die aufgeführten Vorteile ergeben.

Gemäß einer vorteilhaften Ausführungsform der vorliegenden Erfindung kann das Basismaterial aus einer oder mehreren Schichten oder Einzellagen aus gleichem oder unterschiedlichem Material ausgebildet sein. Somit kann die wenigstens eine genähte oder gestickte oder durch Nähen oder Sticken befestigte Struktur beispielsweise auch zwischen den Einzellagen angeordnet werden.

Entsprechend einer bevorzugten Ausgestaltung der vorliegenden Erfindung ist die genähte oder gestickte Struktur auf dem Basismaterial durch Kleben fixiert und/oder verfestigt. So kann beispielsweise eine dreidimensionale Struktur mit einer Klebesubstanz auf dem Basismaterial vorfixiert werden und daraufhin durch Übernähen oder Übersticken auf einer Näh- oder Stickmaschine dauerhaft an dem Basismaterial befestigt werden. Dies ermöglicht es, beispielsweise Bestandteile eines Näh- oder Stickautomaten, wie beispielsweise einen Stickrahmen, zu nutzen, um die dreidimensionale Struktur durch Kleben auf dem Basismaterial vorzufixieren.

In einem besonders bevorzugten Beispiel der vorliegenden Erfindung ist die Selbstreinigungs- und/oder Fördervorrichtung und/oder druck- und/oder reibungsverlustbeeinflussende Struktur eine zumindest teilweise Auskleidung einer Innenwand eines Rohres oder selbst als ein Rohr ausgebildet. Hierbei ist zu beachten, dass zur Beeinflussung des Druckverlustes eine vollständige Rohrauskleidung notwendig ist.

Da Rohre in der Regel zum Transport fließfähiger Medien eingesetzt werden, kann durch die Auskleidung der Innenwand des Rohres bzw. durch die Ausbildung des Rohres erreicht werden, dass sich Feststoffteilchen, die sich in dem zu transportierenden Medium befinden, nicht oder nur in geringem Maße in dem Rohr festsetzen können. Dadurch wird weitgehend verhindert, dass sich der Querschnitt des Rohres durch ein Absetzen von Verunreinigungen oder anderen von dem zu transportierenden Medium mitgeführten Materialien verringert und somit die Transportleistung reduziert wird.

Es ist besonders vorteilhaft, wenn die Selbstreinigungs- und/oder Fördervorrichtung eine zumindest teilweise Auskleidung einer Dachrinne ist. Durch abfließendes Regenwasser, welches in einer Dachrinne aufgefangen wird, werden typischerweise auch Feststoffteilchen von einem Dach in die Dachrinne gespült. Durch die Auskleidung der Dachrinne mit der erfindungsgemäßen Selbstreinigungs- und/oder Fördervorrichtung kann erreicht werden, dass diese Feststoffteilchen beispielsweise bei Regen besonders effektiv innerhalb der Dachrinne weitertransportiert oder bereits darin abgelagerte Feststoffe abgetragen werden.

Gemäß einer weiteren Ausführungsvariante der vorliegenden Erfindung ist das Strömungsprofil in wenigstens einem Sohlbereich des Rohres oder der Dachrinne vorgesehen. Dies ist besonders günstig, da sich das fließfähige Medium insbesondere im unteren Bereich bzw. Sohlbereich des Rohres befindet, wodurch sich hier vorwiegend Ablagerungen absetzen können. Entsprechend bewirkt das im Sohlbereich des Rohres vorgesehene Strömungsprofil in Zusammenwirkung mit einem fließenden Medium, dass im Medium transportierte und/oder abgelagerte Feststoffteilchen mitgerissen werden, sodass durch die Selbstreinigungs- und/oder Fördervorrichtung eine besonders effektive Selbstreinigungswirkung des Rohres zur Verfügung gestellt werden kann.

In einer weiteren Ausführungsvariante der vorliegenden Erfindung ist die Selbstreinigungs- und/oder Fördervorrichtung ein Bedachungsmaterial oder auf einem Bedachungsmaterial vorgesehen. Durch die erfindungsgemäße Selbstreinigungs- und/oder Fördervorrichtung können auf dem Dach abgelagerte Feststoffteilchen beispielsweise bei Regen von abfließendem Regenwasser von dem Dach abtransportiert werden, wodurch die Dachfläche gereinigt werden kann.

Entsprechend einer weiteren Ausgestaltung der vorliegenden Erfindung ist das Basismaterial der erfindungsgemäßen Selbstreinigungs- und/oder Fördervorrichtung aus einem UV-durchlässigen Material ausgebildet und die Selbstreinigungs- und/oder Fördervorrichtung ist auf einem Solarpanel aufgebracht oder in einem Solarpanel integriert. Das mit UV-durchlässigen Materialien hergestellte Basismaterial, wie beispielsweise eine textile Fläche, verhindert die Ansammlung von Feststoffteilchen auf dem Solarpanel und erhöht damit auf längere Sicht die Effizienz des Solarpanels.

In einem besonders günstigen Ausführungsbeispiel der vorliegenden Erfindung weist die Selbstreinigungs- und/oder Fördervorrichtung und/oder druck- und/oder reibungsverlustbeeinflussende Struktur wenigstens ein Gefälle auf und das Strömungsprofil ist derart ausgebildet, dass eine Vorzugsfließrichtung für das fluide Medium vorgegeben wird. Durch das Gefälle wird das zu transportierende, fließfähige Medium in Richtung des Gefälles geleitet, wobei das Strömungsprofil die Vorzugsfließrichtung definiert. Das Gefälle muss dabei nicht immer gleich sein und kann, bedingt durch Turbulenzen, sowohl positiv als auch negativ sein.

Es hat sich als günstig erwiesen, wenn das Basismaterial und/oder das Strömungsprofil aus Kunststoff, aus Glas und/oder aus Metall ausgebildet ist.

Aus Kunststoff sind geeignete Basismaterialien und Fäden herstellbar, die vorteilhaft an Näh- oder Stickmaschinen verarbeitet werden können. Darüberhinaus kann durch den Einsatz von geeignetem Kunststoff die Haltbarkeit der Selbstreinigungs- und/oder Fördervorrichtung und/oder druck- und/oder reibungsverlustbeeinflussenden Struktur erhöht werden, da solche Materialien langzeitstabil und weitgehend chemisch resistent sind.

Gläser besitzen den Vorteil, dass sie besonders stabil gegenüber vielen chemisch aggressiven Substanzen sind sowie eine hohe mechanische Stabilität aufweisen, sodass die Selbstreinigungs- und/oder Fördervorrichtung und/oder druck- und/oder reibungsverlustbeeinflussende Struktur für verschiedene Anwendungszwecke einsetzbar ist und eine hohe Langzeitstabilität aufweist.

Metalle weisen ebenfalls eine hohe Stabilität und Resistenz gegenüber verschiedensten Medien auf. Zudem können Metalle vorteilhaft erfindungsgemäß als Metallgewebe, beispielsweise zur Ausbildung nicht brennbarer Medienleitungen, verwendet werden.

In einem besonders geeigneten Beispiel der vorliegenden Erfindung ist der Kunststoff, das Glas und/oder das Metall aus Fasern oder Fäden ausgebildet oder weist Fasern oder Fäden auf.

In anderen Ausgestaltungsvarianten der vorliegenden Erfindung können das Basismaterial und/oder das Strömungsprofil auch aus anderen Faser- oder Fadenmaterialien, wie synthetischen, organischen, anorganischen, mineralischen und/oder Naturfasern ausgebildet sein.

Es hat sich als besonders günstig erwiesen, wenn die Fasern oder Fäden, aus welchen das Basismaterial und/oder das Strömungsprofil ausgebildet ist, wenigstens eine Beschichtung aufweisen. Durch die Beschichtung kann die Verarbeitbarkeit der Fasern und Fäden erhöht werden, da durch die Beschichtung deren Bruchzähigkeit erhöht werden kann. Somit sind die mit der Beschichtung versehenen Fasern oder Fäden besonders für maschinelle Näh- oder Stickverfahren geeignet, wobei das Auftreten von Fadenbrüchen verringert ist.

Eine besonders gute Reinigungs- und Förderwirkung kann dann erzielt werden, wenn das Strömungsprofil der erfindungsgemäßen Selbstreinigungs- und/oder Fördervorrichtung eine Stickhöhe von ≥ 3 mm aufweist. Dadurch wird eine besonders große Zone ausgebildet, die zwischen der Oberfläche des Strömungsprofils und dem fließfähigen Medium eine turbulente oder quasiturbulente Strömung aufweist. Die turbulente oder quasiturbulente Strömung bewirkt, dass sich in dem Medium befindliche Feststoffteilchen nicht oder schlecht auf der Oberfläche des Strömungsprofils absetzen können sowie dass bereits abgelagerte Feststoffteilchen mitgerissen werden und weitertransportiert werden. Durch die Stickhöhe der Einzelstrukturen kann die Größe der Zone mit der turbulenten oder quasiturbulenten Strömung eingestellt werden, sodass bei einer großen Stickhöhe von ≥ 3 mm selbst größere Feststoffteilchen, wie beispielsweise kleine Steine, bzw. größere Mengen von Feststoffteilchen, wie z.B. Sand, transportiert werden können und/oder festsitzende Ablagerungen gelöst werden können. Für die Herstellung einer erfindungsgemäßen druck- und/oder reibungsverlustbeeinflussende Struktur sollte die Stickhöhe für eine erfolgreiche Druck- und Reibungsverlustminimierung vorzugsweise geringer sein.

In einem weiteren Ausführungsbeispiel der vorliegenden Erfindung ist die Selbstreinigungs- und/oder Fördervorrichtung und/oder druck- und/oder reibungsverlustbeeinflussende Struktur mit wenigstens einem Harz, Kunststoff, Klebstoff und/oder Bindemittel verfestigt und/oder befestigt. Durch die Verwendung eines Harzes, Kunststoffes, Klebstoffes und/oder Bindemittels wird zum einen erreicht, dass das Strömungsprofil durch die Verfestigung mit dem Harz, Kunststoff, Klebstoff und/oder Bindemittel eine erhöhte Stabilität aufweist. Ferner ergibt sich durch die Verfestigung eine glatte, harte und dichte Oberfläche, welche eine hohe mechanische Beständigkeit und eine hohe Resistenz gegenüber aggressiven Medien aufweist. Zum anderen ist es hierdurch möglich, die Selbstreinigungs- und/oder Fördervorrichtung und/oder druck- und/oder reibungsverlustbeeinflussende Struktur unter Verwendung eines Harzes, Kunststoffes, Klebstoffes und/oder Bindemittels an bzw. auf einer Unterlage, wie beispielsweise einer Rohrinnenwand oder einem Dach, zu befestigen.

Vorteilhafte Ausführungsformen der Erfindung, deren Eigenschaften, Funktion und Vorteile werden im Folgenden anhand der Figuren der Zeichnung näher erläutert, wobei
- Figur 1: schematisch ein Ausführungsbeispiel der erfindungsgemäßen Selbstreini- gungs- und/oder Fördervorrichtung und/oder druck- und/oder reibungsver- lustbeeinflussenden Struktur in einer Draufsicht zeigt;
- Figur 2: schematisch eine mittels Mehrkopfstickerei realisierte Einzelstruktur eines Ausführungsbeispiels der erfindungsgemäßen Selbstreinigungs- und/oder Fördervorrichtung und/oder druck- und/oder reibungsverlustbeeinflussen- den Struktur in einer perspektivischen Ansicht zeigt;
- Figur 3: schematisch eine mittels Soutagestickerei realisierte Einzelstruktur eines weiteren Ausführungsbeispiels der erfindungsgemäßen Selbstreinigungs- und/oder Fördervorrichtung und/oder druck- und/oder reibungsverlustbe- einflussenden Struktur in einer perspektivischen Ansicht zeigt;
- Figur 4: schematisch eine eingenähte Einzelstruktur eines weiteren Ausführungs- beispiels der erfindungsgemäßen Selbstreinigungs- und/oder Fördervor- richtung und/oder druck- und/oder reibungsverlustbeeinflussenden Struktur in einer perspektivischen Darstellung zeigt;
- Figur 5: schematisch ein Strömungsprofil eines weiteren Ausführungsbeispiels der erfindungsgemäßen Selbstreinigungs- und/oder Fördervorrichtung in Form eines Rohrinliners in einer perspektivischen Darstellung zeigt; und
- Figur 6: schematisch ein Strömungsprofil eines weiteren Ausführungsbeispiels der erfindungsgemäßen Selbstreinigungs- und/oder Fördervorrichtung in Form eines Bedachungsmaterials in einer perspektivischen Darstellung zeigt.

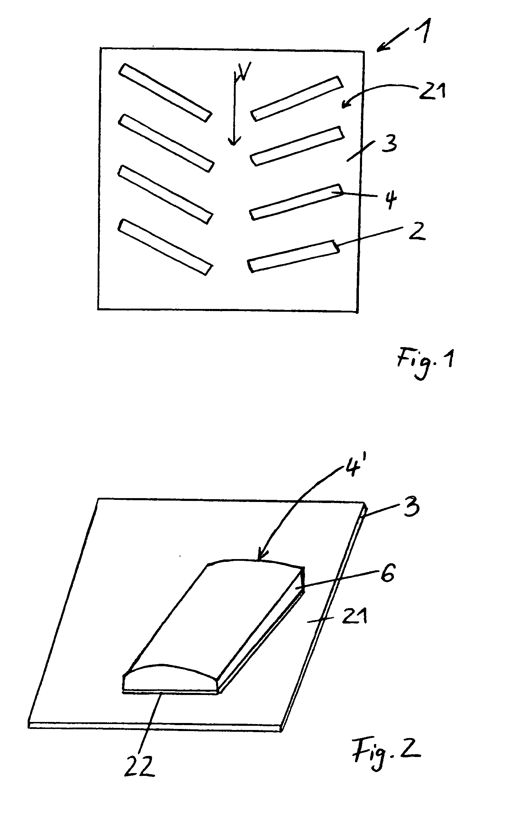

Fig. 1 zeigt eine Selbstreinigungs- und/oder Fördervorrichtung und/oder druck- und/oder reibungsverlustbeeinflussende Struktur 1 gemäß einer Ausführungsform der vorliegenden Erfindung. Die dargestellte Selbstreinigungs- und/oder Fördervorrichtung und/oder druck- und/oder reibungsverlustbeeinflussende Struktur 1 dient zum Transport von fluiden Medien, wie Flüssigkeiten oder Gasen, wobei von dem fließfähigen Medium Feststoffteilchen, wie beispielsweise Sand oder organisches Material, mitgeführt werden können.

Die in Fig. 1 gezeigte Selbstreinigungs- und/oder Fördervorrichtung und/oder druck-und/oder reibungsverlustbeeinflussende Struktur 1 weist ein auf einer Oberfläche 21 eines flexiblen Basismaterials 3 vorgesehenes Strömungsprofil 2 auf.

Das Basismaterial 3 ist in dem Beispiel von Fig. 1 eine textile Struktur wie ein Glasfasergewebe oder ein Glasfaservlies, welches eine hohe mechanische Stabilität aufweist sowie weitgehend chemisch resistent ist. Grundsätzlich sind für das Basismaterial 3 aber auch andere benäh- oder bestickbare bzw. textiltechnologisch verarbeitbare Materialien geeignet.

Das Basismaterial 3 kann beispielsweise auch aus Geweben, Gelegen, Gestricken, Vliesen und/oder Matten ausgebildet sein, welche aus einfachen oder Faserverbundwerkstoffen aus Faserglas, synthetischen, organischen, anorganischen, mineralischen und/oder Naturfasern ausgebildet sein können. Darüber hinaus kann das Basismaterial 3 aus Kunststoff, wie beispielsweise aus einer Kunststofffolie, aus Glas und/oder aus Metall, wie beispielsweise aus einem Metallgewebe, ausgebildet sein.

In dem in Fig. 1 gezeigten Ausführungsbeispiel weist das Strömungsprofil 2 paarweise, gegenüberliegend angeordnete Einzelstrukturen 4 mit einer Neigung gegenüber einer Vorzugsfließrichtung V eines über die Selbstreinigungs- und/oder Fördervorrichtung 1 strömenden Mediums auf. Die Einzelstrukturen 4 sind hier auf das Basismaterial 3 gestickt und weisen in dem gezeigten Beispiel eine rechteckige Grundfläche und einen dreidimensionalen Aufbau, bedingt durch die Stickhöhe der auf das Basismaterial 3 aufgebrachten Stickerei, auf. In anderen, nicht gezeigten Ausführungsvarianten können auch andere Grundflächen und andere Ausrichtungen für die Strukturen des Strömungsprofils eingesetzt werden.

Als Fadenmaterial 5 für die Einzelstrukturen 4 können Fäden aus unterschiedlichen Materialien zum Einsatz kommen. In dem gezeigten Ausführungsbeispiel wurden beschichtete Glasfaserfäden mit einer Feinheit ≤ 100 tex verwendet, da diese besonders mechanisch stabil und weitgehend chemisch resistent sind. Somit kann die Selbstreinigungs-und/oder Fördervorrichtung und/oder druck- und/oder reibungsverlustbeeinflussende Struktur 1 auch unter hoher mechanischer Beanspruchung und in chemisch aggressiven Umgebungen eingesetzt werden, wodurch sich eine hohe Variabilität der Selbstreinigungs- und/oder Fördervorrichtung und/oder druck- und/oder reibungsverlustbeeinflussenden Struktur 1 hinsichtlich der zu transportierenden Medien erhöht.

Die Einzelstrukturen 4 sind in dem in Fig. 1 gezeigten Beispiel mit einer Stickhöhe von ≥ 3 mm, wobei die Stickhöhentoleranz in dem gezeigten Ausführungsbeispiel etwa ± 0,5 mm beträgt, ausgebildet. In anderen, nicht gezeigten Ausführungsvarianten der vorliegenden Erfindung können auch andere Stickhöhen mit variablen Stickhöhentoleranzen verwendet werden.

Durch die dreidimensionale Struktur des Strömungsprofils 2 wird eine turbulente oder quasiturbulente Verwirbelung eines über das Strömungsprofil 2 fließenden Mediums erzeugt. Hierdurch wird verhindert, dass sich in dem Medium mittransportierte Feststoffteilchen auf der Oberfläche 21 der Selbstreinigungs- und/oder Fördervorrichtung und/oder druck- und/oder reibungsverlustbeeinflussenden Struktur 1 absetzen. Ferner kann die Verwirbelung des Mediums bewirken, dass bereits auf der Oberfläche 21 abgelagerte Feststoffteilchen abgetragen werden.

Fig. 2 zeigt schematisch eine mittels Mehrkopfstickerei realisierte Einzelstruktur 4' eines weiteren Ausführungsbeispiels der erfindungsgemäßen Selbstreinigungs- und/oder Fördervorrichtung und/oder druck- und/oder reibungsverlustbeeinflussende Struktur 1 in einer perspektivischen Darstellung. Die Einzelstruktur 4' umfasst eine dreidimensionale Struktur 6, welche mittels eines Fadenmaterials 5 auf einem Basismaterial 3 auf- bzw. festgestickt ist bzw. mit einem Fadenmaterial 5 übernäht wurde.

Die dreidimensionale Struktur 6 ist in dem in Fig. 2 gezeigten Beispiel aus einem Kunststoff ausgebildet, wobei grundsätzlich auch andere Materialien, wie zum Beispiel Metalle, Nichtmetalle, organische Werkstoffe, anorganische Werkstoffe und/oder Faserverbundwerkstoffe aus Faserglas, synthetischen, organischen, anorganischen, mineralischen und/oder Naturfasern zur Ausbildung der dreidimensionalen Struktur 6 geeignet sind. Die dreidimensionale Struktur 6 kann unabhängig von der Selbstreinigungs- und Fördervorrichtung und/oder druck- und/oder reibungsverlustbeeinflussende Struktur 1 hergestellt werden, wobei die dreidimensionale Struktur 6 in vielfältigen Ausgestaltungen herstellbar ist.

Als Fadenmaterial 5 für die Befestigung der dreidimensionalen Struktur 6 können Fäden aus unterschiedlichen Materialien zum Einsatz kommen. In dem in Fig. 2 gezeigten Ausführungsbeispiel wurden Polyesterfäden verwendet. Für die Befestigung der dreidimensionalen Struktur 6 an dem Basismaterial 3 sind besonders reißfeste, chemisch resistente und mechanisch stabile Materialien wie Aramid, Glas, Karbon usw. von Vorteil.

In einer anderen, nicht gezeigten Ausführungsvariante der vorliegenden Erfindung kann die dreidimensionale Struktur 6 zunächst durch eine Kleberschicht auf dem Basismaterial 3 vorfixiert werden und nachfolgend durch Nähen oder Sticken an dem Basismaterial 3 befestigt werden. Das Aufkleben und Nähen oder Sticken kann in der gleichen Maschine erfolgen.

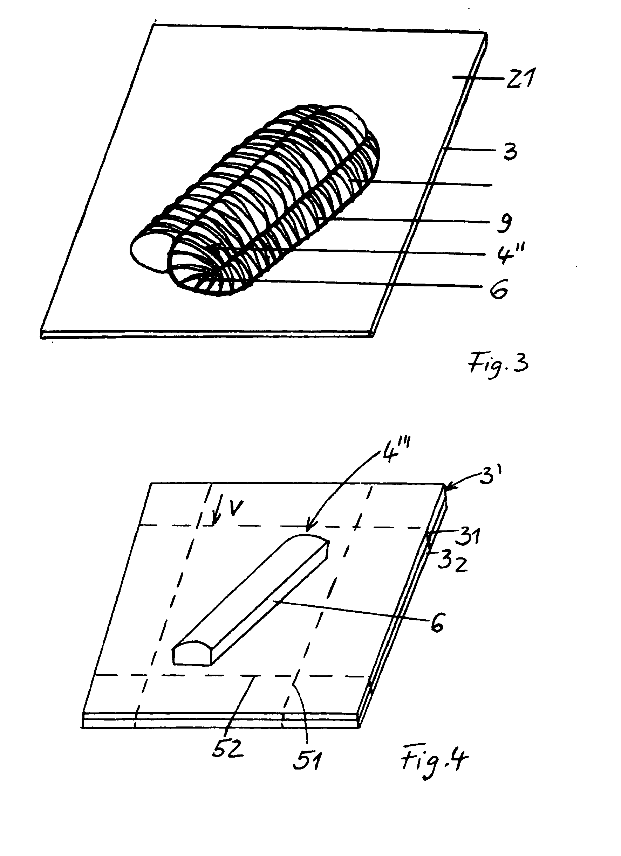

Fig. 3 zeigt schematisch eine mittels Soutagestickerei realisierte Einzelstruktur 4" eines weiteren Ausführungsbeispiels der erfindungsgemäßen Selbstreinigungs- und/oder Fördervorrichtung und/oder druck- und/oder reibungsverlustbeeinflussenden Struktur 1 in einer perspektivischen Darstellung. Das zugehörige Strömungsprofil 2 der Selbstreinigungs- und/oder Fördervorrichtung und/oder druck- und/oder reibungsverlustbeeinflussenden Struktur 1 umfasst eine Vielzahl von Einzelstrukturen 4", wobei in dem in Fig. 3 gezeigten Ausschnitt der Einfachheit halber nur eine Einzelstruktur 4" gezeigt ist.

Die Einzelstruktur 4" umfasst eine dreidimensionale Struktur 6, welche mittels eines Soutagefadens 9 auf einem Basismaterial 3 durch Nähen oder Sticken ausgebildet, d.h. auf dem Basismaterial 3 aufgenäht bzw. aufgestickt ist. Der Soutagefaden 9 zur Ausbildung der dreidimensionalen Struktur 6 ist in diesem Ausführungsbeispiel aus einem Faserverbundwerkstoff aus Faserglas ausgebildet, wobei grundsätzlich auch andere fadenförmige Gebilde aus Materialien und/oder Materialverbunden, wie z.B. aus Metallen, Nichtmetallen, organischen Werkstoffen, anorganischen Werkstoffen und/oder Faserverbundwerkstoffen aus Faserglas, synthetischen, organischen, anorganischen, mineralischen und/oder Naturfasern zur Ausbildung der dreidimensionalen Struktur 6 geeignet sind.

In dem in Fig. 3 gezeigten Ausführungsbeispiel ist die dreidimensionale Struktur 6 durch Übereinanderlegen und Feststicken des Soutagefadens 9 aufgebaut.

Bezüglich der Materialauswahl für das Basismaterial 3 gilt gleiches wie zu dem in Fig. 2 gezeigten Ausführungsbeispiel, sodass hier auf obige Ausführungen verwiesen wird.

Fig. 4 zeigt schematisch eine zwischen zwei Materiallagen eingenähte Einzelstruktur 4'" einer weiteren Ausführungsvariante der erfindungsgemäßen Selbstreinigungs- und/oder Fördervorrichtung und/oder druck- und/oder reibungsverlustbeeinflussenden Struktur 1 in einer perspektivischen Darstellung.

In dem in Fig. 4 gezeigten Ausführungsbeispiel ist das Basismaterial 3' aus wenigstens zwei miteinander verbundenen Materiallagen 31, 32 ausgebildet, die hier aus einem textilen Material ausgebildet sind. Zwischen den textilen Lagen 31, 32 ist eine dreidimensionale Struktur 6 eingebracht. Hinsichtlich der Ausbildung der dreidimensionalen Struktur 6 wird auf obige Ausführungen zu Fig. 3 verwiesen.

Die textilen Lagen 31, 32 sind durch Nähte 51, 52 miteinander verbunden. Für die Nähte 51, 52 können beliebige Fäden verwendet werden, wobei die Nähte 51, 52 in der Ausführungsvariante gemäß Fig. 4 aus Glasfaserfäden ausgebildet sind.

Für die Materiallagen 31, 32 können beliebige benäh- oder bestickbare Materialien, wie beispielsweise textile Gewebe oder Vliese, verwendet werden.

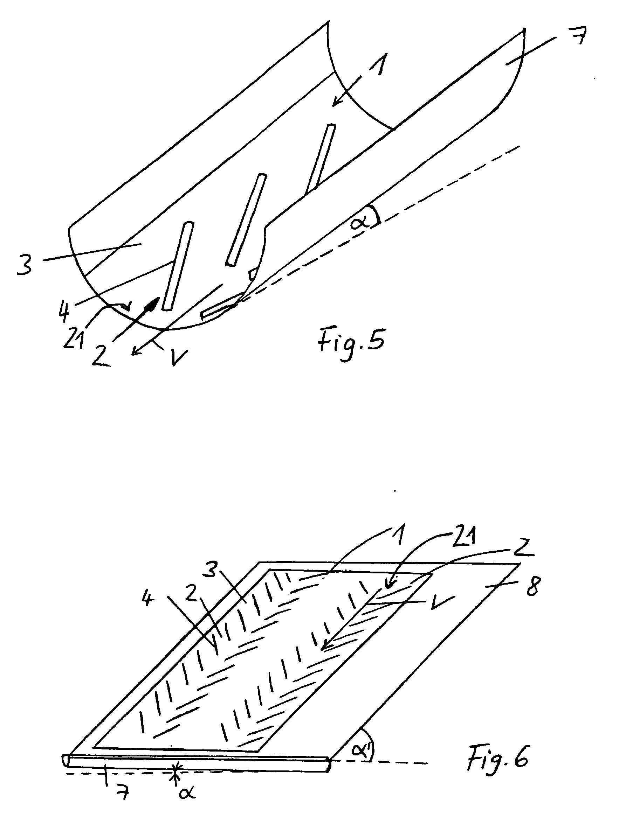

Fig. 5 zeigt schematisch eine weitere Ausführungsvariante der erfindungsgemäßen Selbstreinigungs- und/oder Fördervorrichtung 1 in Form eines Rohrinliners in einer perspektivischen Darstellung.

Der Rohrinliner dient der Auskleidung einer Rohrleitung oder einer Rinne 7, beispielsweise einer Dachrinne, wobei die Selbstreinigungs- und/oder Fördervorrichtung 1 in dem gezeigten Beispiel in einem Sohlbereich der Innenwand der Rinne 7 vorgesehen ist. Die Rohrleitung oder die Rinne 7 kann dabei aus jedem für eine Rohrleitung oder Dachrinne geeigneten Material ausgebildet sein, insbesondere jedoch aus Kunststoff oder Metall, wobei ganz besonders PVC oder Aluminium geeignet sind.

Der Rohrinliner weist ein auf der Oberfläche 21 eines Basismaterials 3 vorgesehenes Strömungsprofil 2 auf, das wie in den Fig. 1 bis 4 gezeigt ausgebildet sein kann. Die Rohrleitung oder Rinne 7 weist ein Gefälle a auf, durch welches eine Vorzugsfließrichtung für das durch die Rohrleitung der Rinne 7 zu führende Medium definiert wird.

Die Einzelstrukturen 4 des Strömungsprofils 2 sind entsprechend einer Vorzugsfließrichtung V des über das Strömungsprofil 2 fließenden Mediums geneigt. Durch die dreidimensionale Ausbildung der Einzelstrukturen 4 wird das jeweilige über das Strömungsprofil 2 fließende Medium turbulent oder quasiturbulent verwirbelt, wodurch eine Selbstreinigungswirkung der Selbstreinigungs- und/oder Fördervorrichtung 1 bereitgestellt werden kann.

Wie in Fig. 5 gezeigt, soll die erfindungsgemäße Selbstreinigungs- und/oder Fördervorrichtung 1 zumindest in einem unteren Bereich der Rohrleitung oder Rinne 7 angeordnet sein, in welchem das zu transportierende Medium im Wesentlichen transportiert wird. Der Rohrinliner kann jedoch auch an den Seiten der Rohrleitung bzw. auch rundum im Inneren eines Rohres vorgesehen sein. Während es bei im Stand der Technik verwendeten Rohren mit glatten Innenflächen bekannt ist, dass insbesondere bei Rohrkrümmungen, Abzweigungen, Vereinigungen, Reduzierungen und Rohrerweiterungen Feststoffteilchen abgelagert werden, werden durch die turbulente und/oder quasiturbulente Verwirbelung des über die Selbstreinigungs- und/oder Fördervorrichtung 1 fließenden Mediums solche Ablagerungen nahezu vollständig verhindert. Selbst bei einem diskontinuierlichen Betrieb einer Rohrleitung ist die Selbstreinigungs- und/oder Fördervorrichtung 1 besonders vorteilhaft. Darüber hinaus werden auch bereits in der Rohrleitung oder Rinne 7 abgelagerte Feststoffteilchen von dem fließenden Medium abgetragen.

Die Selbstreinigungs- und/oder Fördervorrichtung 1 haftet in dem in Fig. 5 gezeigten Ausführungsbeispiel durch ein beim Einbringen der Selbstreinigungs- und/oder Fördervorrichtung 1 aufgebrachtes Harz an der Rohrleitung bzw. Rinne 7. In dem gezeigten Beispiel wurde das Harz durch UV-Strahlung gehärtet, wobei aber auch andere Härtungsmechanismen, wie beispielsweise durch Hitze, denkbar sind. In anderen, nicht gezeigten Ausführungsvarianten der vorliegenden Erfindung kann auch ein aushärtbarer Kunststoff verwendet werden. Dadurch wird zumindest das Basismaterial 3 der Selbstreinigungs- und/oder Fördervorrichtung 1 mit der Rohrleitung oder Rinne 7 verklebt, sodass die Selbstreinigungs- und/oder Fördervorrichtung 1 ihre Position innerhalb der Rohrleitung oder Rinne 7 beibehält. Die Selbstreinigungs- und/oder Fördervorrichtung 1 wird durch das ausgehärtete Harz oder den ausgehärteten Kunststoff in der eingebrachten Position verfestigt, wodurch ein Formschluss zwischen der Selbstreinigungs-und/oder Fördervorrichtung 1 und der Rohrleitung bzw. Rinne 7 ausgebildet wird.

Ferner wird durch die Aushärtung des Harzes oder Kunststoffes gewährleistet, dass das Strömungsprofil 2 der erfindungsgemäßen Selbstreinigungs- und/oder Fördervorrichtung 1 eine erhöhte mechanische Stabilität und eine hohe Langzeitstabilität aufweist.

In anderen, nicht gezeigten Ausführungsvarianten der vorliegenden Erfindung ist es möglich, dass die Selbstreinigungs- und/oder Fördervorrichtung 1 selbst als ein Rohr oder eine Rinne ausgebildet ist.

Fig. 6 zeigt schematisch ein Strömungsprofil 2 eines weiteren Ausführungsbeispiels der erfindungsgemäßen Selbstreinigungs- und/oder Fördervorrichtung 1 in Form eines Bedachungsmaterials in einer perspektivischen Darstellung. Die gezeigte Selbstreinigungs-und/oder Fördervorrichtung eignet sich auch zur Anbringung auf Dach- und Fassadenelementen.

In der in Fig. 6 gezeigten Weiterbildung der vorliegenden Erfindung sind mehrere Strömungsprofile 2 nebeneinander auf einem auf einem Dach 8 aufgebrachten Basismaterial 3 angeordnet, wobei das Dach ein Gefälle α' aufweist. Die Strömungsprofile 2 der Selbstreinigungs- und/oder Fördervorrichtung 1 sind in dem hier gezeigten Beispiel gemäß Fig. 1 ausgebildet, sodass auf obige Ausführungen verwiesen wird, wobei gleiche Bezugszeichen gleiche Elemente und Eigenschaften benennen. Die Befestigung der Selbstreinigungs- und/oder Fördervorrichtung 1 erfolgt über ein Ankleben mit einem aushärtbaren Harz oder Kunststoff, wobei aber auch andere Befestigungsmechanismen wie Nageln prinzipiell denkbar sind.

Am unteren Ende des Daches 8 ist eine Rinne 7 angeordnet. Die Rinne 7 ist im Wesentlichen wie die in Fig. 5 gezeigte Rinne 7 ausgebildet, sodass auf obige Ausführungen verwiesen wird.

Durch die Selbstreinigungs- und/oder Fördervorrichtung 1 wird abfließendem Regenwasser durch das Strömungsprofil 2 eine Vorzugsfließrichtung V vorgegeben. Durch die Einzelstrukturen 4 werden turbulente oder quasiturbulente Verwirbelungen in dem abfließenden Regenwasser auf der Dachoberfläche erzeugt. Diese Verwirbelungen gewährleisten zum Einen einen besseren Abfluss des Regenwassers vom Dach und bewirken andererseits, dass sich in dem Regenwasser befindliche Feststoffteilchen nicht auf der Selbstreinigungs- und/oder Fördervorrichtung 1 ablagern können. Ferner werden bereits auf dem Dach 8 abgelagerte Feststoffteilchen von dem turbulent oder quasiturbulent abfließenden Regenwasser abgetragen. Das Gemisch aus abfließendem Regenwasser und mittransportierten Feststoffteilchen wird in der Rinne 7 aufgefangen. Da in dem gezeigten Ausführungsbeispiel auch die Rinne 7 mit einer erfindungsgemäßen Selbstreinigungs- und/oder Fördervorrichtung 1 ausgekleidet ist, fließt hier das Wasser leicht ab und es setzen sich auch in der Rinne 7 nahezu keine Feststoffteilchen ab. Darüber hinaus wird die Rinne 7 durch das abfließende Regenwasser gereinigt.

Somit kann unabhängig von der konkreten speziellen Ausgestaltung der erfindungsgemäßen Selbstreinigungs- und/oder Fördervorrichtung 1 einer Ablagerung von Feststoffen in Leitungen, in Rinnen oder auf geneigten Flächen entgegengewirkt werden. Im Ergebnis bleiben die Strömungsquerschnitte von Leitungen oder Rinnen über lange Zeit im Wesentlichen unbeeinträchtigt und große Flächen, wie Dächer, optisch ansprechend, ohne dass spezielle Reinigungsschritte vorgenommen werden müssen. Abwasser und Beimengungen können bis zu sieben Mal schneller abtransportiert werden als bei glatten Innen- oder Oberflächen, da beispielsweise bei Rohren oder Rinnen die erfindungsgemäß vorgesehenen Strömungsprofile die laminare Randströmung zerstören und künstliche Turbulenzen in der wandnahen Zone erzeugen.

Neben den oben beispielhaft erwähnten Anwendungsmöglichkeiten der vorliegenden Erfindung in Rohren und Rinnen sowie auf Dächern, kann die erfindungsgemäße Selbstreinigungs- und/oder Fördervorrichtung auch auf einem Solarpanel aufgebracht oder in einem Solarpanel integriert werden. Bei dieser Anwendungsvariante ist das Basismaterial aus UV-durchlässigem Material ausgebildet, sodass Licht ungehindert von dem Solarpanel empfangen werden kann und dennoch durch die aufgebrachte erfindungsgemäße Selbstreinigungs- und/oder Fördervorrichtung ein effektiver Reinigungseffekt für das Solarpanel zur Verfügung gestellt werden kann.

Durch die zur Erzeugung der Strömungsprofile eingesetzten näh- bzw. sticktechnischen Verfahren und der damit verbundenen textiltechnischen Einzigartigkeit des Näh- bzw. Stickprozesses, ergibt sich eine freie Positionierbarkeit der Strukturen der Strömungsprofile in x- und y-Richtung auf der Fläche sowie eine Erhöhung in z-Richtung des Raumes über 3 mm hinaus. Entsprechend können erfindungsgemäß Strömungsprofile mit Strukturkörpern in einer definierten Größe und einer bestimmen Anordnung auf ausgewählte Basismaterialien, wie textile Glasfasergewebe, aufgebracht werden. Das erzeugte Gestick bzw. die erzeugte genähte Struktur kann somit effektiv als Halbzeug zur Konfektion von Glasfaserkunststoffrohrinlinern (GFK-Rohrinlinern) mit neuartiger strukturierter Innenoberfläche eingesetzt werden. In Prozessschritten der Kanalsanierung, wie z.B. dem Tränken des Liners mit flüssigen Kunststoffen oder Harzen, dem Lagern, dem Einbringen in den Kanal sowie der Aushärtung beim Betrieb des sanierten Rohres, wird durch die feste Positionierung der genähten oder gestickten Strukturen gewährleistet, dass diese Strukturen permanent gegenüber Beanspruchung ihre Dreidimensionalität und Lage bewahren und den Anforderungen an einen Schlauchliner entsprechen.

## Patentansprüche

1. Selbstreinigungs- und/oder Fördervorrichtung und/oder druck- und/oder reibungsverlustbeeinflussende Struktur (1) für fluide Medien mit einer ein Strömungsprofil (2) aufweisenden Oberfläche (21), **dadurch gekennzeichnet, dass** das Strömungsprofil (2) wenigstens eine dreidimensionale, in oder auf wenigstens ein flexibles Basismaterial (3, 3') genähte oder gestickte Struktur und/oder wenigstens eine mittels Nähen oder Sticken in oder auf dem wenigstens einen Basismaterial (3, 3') befestigte oder ausgebildete dreidimensionale Struktur (6) aufweist.

2. Selbstreinigungs- und/oder Fördervorrichtung und/oder druck- und/oder reibungsverlustbeeinflussende Struktur nach Anspruch 1, **dadurch gekennzeichnet, dass** das Basismaterial (3, 3') und/oder die dreidimensionale Struktur (6) eine textile Struktur ist.

3. Selbstreinigungs- und/oder Fördervorrichtung und/oder druck- und/oder reibungsverlustbeeinflussende Struktur nach einem der vorhergehenden Ansprüche, **dadurch gekennzeichnet, dass** das Basismaterial (3, 3') aus einer oder mehreren Schichten aus gleichem oder unterschiedlichen Material ausgebildet ist.

4. Selbstreinigungs- und/oder Fördervorrichtung und/oder druck- und/oder reibungsverlustbeeinflussende Struktur nach einem der vorhergehenden Ansprüche, **dadurch gekennzeichnet, dass** die genähte oder gestickte Struktur auf dem Basismaterial (3, 3') durch Kleben fixiert und/oder verfestigt ist.

5. Selbstreinigungs- und/oder Fördervorrichtung und/oder druck- und/oder reibungsverlustbeeinflussende Struktur nach einem der vorhergehenden Ansprüche, **dadurch gekennzeichnet, dass** die Selbstreinigungs- und/oder Fördervorrichtung und/oder druck- und/oder reibungsverlustbeeinflussende Struktur (1) eine zumindest teilweise Auskleidung einer Innenwand eines Rohres ist oder selbst als ein Rohr ausgebildet ist.

6. Selbstreinigungs- und/oder Fördervorrichtung nach einem der Ansprüche 1 bis 4, **dadurch gekennzeichnet, dass** die Selbstreinigungs- und/oder Fördervorrichtung (1) eine zumindest teilweise Auskleidung einer Dachrinne (7) ist.

7. Selbstreinigungs- und/oder Fördervorrichtung nach einem der Ansprüche 5 oder 6, **dadurch gekennzeichnet, dass** das Strömungsprofil (2) in wenigstens einem Sohlbereich des Rohres oder der Dachrinne (7) vorgesehen ist.

8. Selbstreinigungs- und/oder Fördervorrichtung nach einem der Ansprüche 1 bis 4, **dadurch gekennzeichnet, dass** die Selbstreinigungs- und/oder Fördervorrichtung (1) ein Bedachungsmaterial ist oder auf einem Bedachungsmaterial vorgesehen ist.

9. Selbstreinigungs- und/oder Fördervorrichtung nach einem der Ansprüche 1 bis 3, **dadurch gekennzeichnet, dass** das Basismaterial (3, 3') aus UV-durchlässigem Material ausgebildet ist und die Selbstreinigungs- und/oder Fördervorrichtung (1) auf einem Solarpanel aufgebracht oder in einem Solarpanel integriert ist.

10. Selbstreinigungs- und/oder Fördervorrichtung und/oder druck- und/oder reibungsverlustbeeinflussende Struktur nach einem der vorhergehenden Ansprüche, **dadurch gekennzeichnet, dass** die Selbstreinigungs- und/oder Fördervorrichtung und/oder druck- und/oder reibungsverlustbeeinflussende Struktur (1) wenigstens ein Gefälle (α, α') aufweist und das Strömungsprofil (2) derart ausgebildet ist, dass eine Vorzugsfließrichtung (V) für das fluide Medium vorgegeben wird.

11. Selbstreinigungs- und/oder Fördervorrichtung und/oder druck- und/oder reibungsverlustbeeinflussende Struktur nach einem der vorhergehenden Ansprüche, **dadurch gekennzeichnet, dass** das Basismaterial (3, 3') und/oder das Strömungsprofil (2) aus Kunststoff, aus Glas und/oder aus Metall ausgebildet ist.

12. Selbstreinigungs- und/oder Fördervorrichtung und/oder druck- und/oder reibungsverlustbeeinflussende Struktur nach Anspruch 11, **dadurch gekennzeichnet, dass** der Kunststoff, das Glas und/oder das Metall aus Fasern oder Fäden ausgebildet ist oder Fasern oder Fäden aufweist.

13. Selbstreinigungs- und/oder Fördervorrichtung und/oder druck- und/oder reibungsverlustbeeinflussende Struktur nach einem der vorhergehenden Ansprüche, **dadurch gekennzeichnet, dass** das Basismaterial (3, 3') und/oder das Strömungsprofil (2) aus Fasern oder Fäden ausgebildet ist, die wenigstens eine Beschichtung aufweisen.

14. Selbstreinigungs- und/oder Fördervorrichtung und/oder druck- und/oder reibungsverlustbeeinflussende Struktur nach einem der vorhergehenden Ansprüche, **dadurch gekennzeichnet, dass** das Strömungsprofil (2) eine Stickhöhe h von ≥ 3 mm aufweist.

15. Selbstreinigungs- und/oder Fördervorrichtung und/oder druck- und/oder reibungsverlustbeeinflussende Struktur nach einem der vorhergehenden Ansprüche, **dadurch gekennzeichnet, dass** die Selbstreinigungs- und/oder Fördervorrichtung und/oder druck- und/oder reibungsverlustbeeinflussende Struktur (1) mit wenigstens einem Harz, Kunststoff, Klebstoff und/oder Bindemittel verfestigt und/oder befestigt ist.

## Claims

1. Self-cleaning and/or transport device and/or structure which influences pressure and/or friction loss (1) for fluid media, having a surface (21) exhibiting a flow profile (2), **characterized in that** the flow profile (2) has at least one three-dimensional structure which is sewn or stitched into or onto a flexible base material (3, 3') and/or at least one three-dimensional structure (6) which is fastened to or configured on the at least one base material (3, 3') by means of sewing or stitching.

2. Self-cleaning and/or transport device and/or structure which influences pressure and/or friction loss according to claim 1, **characterized in that** the base material (3, 3') and/or the three-dimensional structure (6) is a textile structure.

3. Self-cleaning and/or transport device and/or structure which influences pressure and/or friction loss according to one of the preceding claims, **characterized in that** the base material (3, 3') is configured from one or more layers of the same material or of a different material.

4. Self-cleaning and/or transport device and/or structure which influences pressure and/or friction loss according to one of the preceding claims, **characterized in that** the sewn or stitched structure is fixed and/or solidified on the base material (3, 3') by adhesive bonding.

5. Self-cleaning and/or transport device and/or structure which influences pressure and/or friction loss according to one of the preceding claims, **characterized in that** the self-cleaning and/or transport device and/or structure (1) which influences pressure and/or friction loss is an at least partial lining of an inner wall of a pipe or is itself configured as a pipe.

6. Self-cleaning and/or transport device according to one of claims 1 to 4, **characterized in that** the self-cleaning and/or transport device (1) is an at least partial lining of a roof gutter (7).

7. Self-cleaning and/or transport device according to one of claims 5 or 6, **characterized in that** the flow profile (2) is provided in at least a base region of the pipe or the roof gutter (7).

8. Self-cleaning and/or transport device according to one of claims 1 to 4, **characterized in that** the self-cleaning and/or transport device (1) is a roofing material or is provided on a roofing material.

9. Self-cleaning and/or transport device according to one of claims 1 to 3, **characterized in that** the base material (3, 3') is configured from UV-permeable material and the self-cleaning and/or transport device (1) is applied to a solar panel or integrated into a solar panel.

10. Self-cleaning and/or transport device and/or structure which influences pressure and/or friction loss according to one of the preceding claims, **characterized in that** the self-cleaning and/or transport device and/or structure (1) which influences pressure and/or friction loss has at least one incline (α, α') and the flow profile (2) is configured such that a preferred direction of flow (V) for the fluid medium is predetermined.

11. Self-cleaning and/or transport device and/or structure which influences pressure and/or friction loss according to one of the preceding claims, **characterized in that** the base material (3, 3') and/or the flow profile (2) are/is configured from glass and/or metal.

12. Self-cleaning and/or transport device and/or structure which influences pressure and/or friction loss according to claim 11, **characterized in that** the plastic, the glass and/or the metal are/is configured from fibres or threads, or exhibit/exhibits fibres or threads.

13. Self-cleaning and/or transport device and/or structure which influences pressure and/or friction loss according to one of the preceding claims, **characterized in that** the base material (3, 3') and/or the flow profile (2) are/is configured from fibres or threads which have at least one coating.

14. Self-cleaning and/or transport device and/or structure which influences pressure and/or friction loss according to one of the preceding claims, **characterized in that** the flow profile (2) has a stitching height h of ≥ 3 mm.

15. Self-cleaning and/or transport device and/or structure which influences pressure and/or friction loss according to one of the preceding claims, **characterized in that** the self-cleaning and/or transport device and/or structure (1) which influences pressure and/or friction loss is solidified and/or fastened with at least a resin, plastic, adhesive and/or bonding agent.

## Revendications

1. Dispositif de nettoyage et/ou de transport automatique et/ou structure influençant la perte de charge et/ou la perte par friction (1) pour des milieux fluides avec une surface (21) présentant un profil d'écoulement (2), **caractérisé en ce que** le profil d'écoulement (2) présente au moins une structure tridimensionnelle cousue ou brodée dans ou sur au moins un matériau de base flexible (3, 3') et/ou au moins une structure tridimensionnelle (6) fixée ou formée dans ou sur ledit au moins un matériau de base (3, 3') par couture ou broderie.

2. Dispositif de nettoyage et/ou de transport automatique et/ou structure influençant la perte de charge et/ou la perte par friction selon la revendication 1, **caractérisé en ce que** le matériau de base (3, 3') et/ou la structure tridimensionnelle (6) est une structure textile.

3. Dispositif de nettoyage et/ou de transport automatique et/ou structure influençant la perte de charge et/ou la perte par friction selon l'une quelconque des revendications précédentes, **caractérisé en ce que** le matériau de base (3, 3') est formé en une ou plusieurs couches d'un matériau identique ou différent.

4. Dispositif de nettoyage et/ou de transport automatique et/ou structure influençant la perte de charge et/ou la perte par friction selon l'une quelconque des revendications précédentes, **caractérisé en ce que** la structure cousue ou brodée est fixée et/ou est consolidée par collage sur le matériau de base (3, 3').

5. Dispositif de nettoyage et/ou de transport automatique et/ou structure influençant la perte de charge et/ou la perte par friction selon l'une quelconque des revendications précédentes, **caractérisé en ce que** le dispositif de nettoyage et/ou de transport automatique et/ou la structure influençant la perte de charge et/ou la perte par friction (1) est un revêtement au moins partiel d'une paroi intérieure d'un tube ou est réalisé(e) lui-même/elle-même en forme de tube.

6. Dispositif de nettoyage et/ou de transport automatique selon l'une quelconque des revendications 1 à 4, **caractérisé en ce que** le dispositif de nettoyage et/ou de transport automatique (1) est un revêtement au moins partiel d'une gouttière (7).

7. Dispositif de nettoyage et/ou de transport automatique selon l'une quelconque des revendications 5 ou 6, **caractérisé en ce que** le profil d'écoulement (2) est prévu dans au moins une zone du fond du tube ou de la gouttière (7).

8. Dispositif de nettoyage et/ou de transport automatique selon l'une quelconque des revendications 1 à 4, **caractérisé en ce que** le dispositif de nettoyage et/ou de transport automatique (1) est un matériau de toiture ou est prévu sur un matériau de toiture.

9. Dispositif de nettoyage et/ou de transport automatique selon l'une quelconque des revendications 1 à 3, **caractérisé en ce que** le matériau de base (3, 3') est réalisé en matériau perméable aux UV et le dispositif de nettoyage et/ou de transport automatique (1) est déposé sur un panneau solaire ou est intégré dans un panneau solaire.

10. Dispositif de nettoyage et/ou de transport automatique et/ou structure influençant la perte de charge et/ou la perte par friction selon l'une quelconque des revendications précédentes, **caractérisé en ce que** le dispositif de nettoyage et/ou de transport automatique et/ou la structure influençant la perte de charge et/ou la perte par friction (1) présente une inclinaison (α, α') et le profil d'écoulement (2) est réalisé de façon à prédéterminer une direction d'écoulement préférentielle (V) pour le milieu fluide.

11. Dispositif de nettoyage et/ou de transport automatique et/ou structure influençant la perte de charge et/ou la perte par friction selon l'une quelconque des revendications précédentes, **caractérisé en ce que** le matériau de base (3, 3') et/ou le profil d'écoulement (2) est réalisé en matière plastique, en verre et/ou en métal.

12. Dispositif de nettoyage et/ou de transport automatique et/ou structure influençant la perte de charge et/ou la perte par friction selon la revendication 11, **caractérisé en ce que** la matière plastique, le verre et/ou le métal est formé à partir de fibres ou de filaments ou présente des fibres ou des filaments.

13. Dispositif de nettoyage et/ou de transport automatique et/ou structure influençant la perte de charge et/ou la perte par friction selon l'une quelconque des revendications précédentes, **caractérisé en ce que** le matériau de base (3, 3') et/ou le profil d'écoulement (2) est réalisé à partir de fibres ou de filaments, qui présentent au moins un revêtement.

14. Dispositif de nettoyage et/ou de transport automatique et/ou structure influençant la perte de charge et/ou la perte par friction selon l'une quelconque des revendications précédentes, **caractérisé en ce que** le profil d'écoulement (2) présente une hauteur de broderie h de ≥ 3 mm.

15. Dispositif de nettoyage et/ou de transport automatique et/ou structure influençant la perte de charge et/ou la perte par friction selon l'une quelconque des revendications précédentes, **caractérisé en ce que** le dispositif de nettoyage et/ou de transport automatique et/ou la structure influençant la perte de charge et/ou la perte par friction (1) est consolidé(e) et/ou fixé(e) avec au moins une résine, une matière plastique, un adhésif et/ou un agent liant.
